# EUROPÄISCHE PATENTSCHRIFT

(11) **EP 1 135 573 B1**
(45) Veröffentlichungstag und Bekanntmachung des Hinweises auf die Patenterteilung: **13.11.2002**
(21) Anmeldenummer: 99925027.7
(22) Anmeldetag: 21.05.1999
(51) Int. Cl.: E05G 1/024, E04H 1/12, G06F 1/18

(54) **SICHERHEITSSCHRANK UND BAUSATZ FÜR EINE SCHRANKANORDNUNG**
STRONGBOX AND KIT FOR AN AGGREGATE BOX
COFFRE DE SECURITE ET KIT POUR UN ENSEMBLE DE COFFRES

(30) Priorität: 04.12.1998 DE 19855931
(43) Veröffentlichungstag der Anmeldung: 26.09.2001
(73) Patentinhaber: Otto Lampertz GmbH & Co. Kg., 57584 Wallmenroth (DE)
(72) Erfinder: FRASE, Hans-Jürgen, D-57520 Niederdreisbach (DE); WELLER, Torsten, D-57586 Weitefeld (DE)
(74) Vertreter: Fleck, Hermann-Josef, Dr.-Ing.
(86) Internationale Anmeldenummer: EP9903510
(87) Internationale Veröffentlichungsnummer: WO00034613

(56) Entgegenhaltungen:
- EP-A- 0 560 191
- DE-A- 3 718 911
- DE-U- 29 605 183
- FR-A- 2 678 672
- US-A- 4 559 881

## Beschreibung

Die Erfindung betrifft einen Sicherheitsschrank mit einem Bodenelement, zwei Seitenelementen, einem Rückwandelement, einem Kopfelement und einem vorderen - oder einem vorderen und hinteren - Zargenelement mit Anschlusselementen für ein Türelement, die an aufeinander ausgerichteten Verbindungsstellen mit Dichtungen und mit komplementären Verbindungselementen zum Zusammenbau und Demontieren durch einen Anwender versehen sind sowie einen Bausatz für eine Schrankanordnung bestehend aus einem oder mehreren Sicherheitsschränken.

Bei einem derartigen Sicherheitsschrank, wie er in der FR-A 2 678 672 angegeben ist, sind ein Bodenelement, zwei Seitenelemente, ein Rückwandelement, ein Kopfelement und ein Zargenelement mit Türelement auseinandernehmbar miteinander verbunden, wobei zwischen den falzartigen Verbindungsstellen Dichtungen eingebracht sein können, über deren Eigenschaften jedoch keine näheren Aussagen getroffen sind. Zwar ist angegeben, dass die Wandelemente von einem Anwender selbst montierbar und demontierbar sein sollen, jedoch sind derartige Wandelemente relativ schwer und können zu Schwierigkeiten beim Hantieren führen.

Ein weiterer Sicherheitsschrank mit derartigen Wandelementen aus Beton ist in der US-A 4,559,881 vorgeschlagen.

Es ist Aufgabe der Erfindung, einen Sicherheitsschrank und einen Bausatz bereit zu stellen, der insbesondere auch zum nachträglichen Verkleiden eines betriebsbereiten Gestellaufbaues geeignet ist.

Diese Aufgabe wird mit den Merkmalen des Anspruches 1 bzw. des Anspruches 9 gelöst. Der Gestellaufbau kann um mindestens die Stärke eines Bodenelementes angehoben werden, wonach der Gestellaufbau auf dem untergeschobenen Bodenelement abgestellt und positioniert werden kann. Danach kann die weitere Umkleidung problemlos erfolgen.

Damit einheitliche Verbindungselemente an allen Verbindungsstellen verwendet werden können, ist vorgesehen, dass die vertikalen Rahmenschenkel der Zargenelemente im Querschnitt L-förmig ausgebildet und mit Verbindungsflächen für die vertikalen Seitenelemente versehen werden.

Der Gestellaufbau kann ohne die Anschlusskabel zu lösen mit einer Hubvorrichtung um die zum Unterschieben des Bodenelementes erforderliche Höhe angehoben werden. Ist das Bodenelement untergeschoben, dann wird der Gestellaufbau abgesetzt und so positioniert, dass es allseitig so weit am Gestellaufbau vorsteht, dass die zur Verkleidung vorgesehenen Elemente auf dem Bodenelement aufgesetzt und gegebenenfalls mit diesem verbunden werden können.

Der Sicherheitsschrank kann bei nicht vorhandenem Gestellaufbau auch ohne Durchführung der beiden ersten Schritte aufgebaut werden, um dann nachträglich die Einbauten im Schrank anzuordnen.

Ein vorderes und ein hinteres Zargenelement werden verwendet, wenn die Vorderseite und die Rückseite des verkleideten Gestellaufbaus zugänglich sein sollen. Ist nur ein Zugang auf der Vorderseite gefordert, dann wird die Rückseite mit einem Rückwandelement verkleidet und/oder mit einem Klimagerät versehen. Die Verbindung der Elemente untereinander wird an vorgesehenen und aufeinander ausgerichteten Stellen der horizontalen und/oder vertikalen aufeinanderstoßenden Stirnflächen der Elemente vorgenommen, wobei die Anzahl der Verbindungsstellen zwischen zwei Elementen zwei und größer sein kann, um einen ausreichenden Halt zu erreichen.

Es ist auch denkbar, mehrere Zargenelemente auf der Vorderseite und Rückwandelemente aneinanderzureihen, um eine aneinandergereihte Schrankanordnung aufzubauen, wobei zwischenliegende Seitenwände weggelassen sind und mehrere Bodenelemente oder ein gemeinsames Bodenelement verwendet werden können.

Nach einer bevorzugten Ausgestaltung ist vorgesehen, dass das vordere und das hintere Zargenelement aus vertikalen und horizontalen Rahmenschenkeln rahmenartig zusammengesetzt sind. Dabei kann zur Reduzierung der erforderlichen Elemente zudem vorgesehen sein, dass das vordere und hintere Zargenelement identisch ausgebildet sind.

Demselben Zweck dient auch eine Ausgestaltung, die dadurch gekennzeichnet ist, dass das Bodenelement und das Kopfelement identisch ausgebildet sind.

Eine einfache, schnell durchführbare Montage der Verkleidung wird dadurch erreicht, dass für die Verbindung der Elemente an sich bekannte Drehriegelverschlüsse verwendet werden, deren aufeinander abgestimmte Verschlusselemente an den aufeinanderstoßenden Flächen an aufeinander ausgerichteten Verbindungsstellen in die Elemente eingebaut werden. Derartige Hakenverschlüsse sind handelsüblich, wobei die beiden Verschlussteile in die aufeinanderstoßenden Stirnflächen der Elemente einbaubar sind. Der Haken kann in dem einen Verschlussteil drehbar gelagert sein und in das hülsenartige andere Verschlussteil eingeführt werden. Nach dem Einführen wird der Haken auf einen Spannbolzen gedreht und bei einer zusätzlichen exzentrischen Verstellung entsprechend verspannt, so dass die miteinander verbundenen Elemente unter Spannung gegeneinander gezogen werden. Die Elemente müssen dazu nur eine Zugangsöffnung zum Drehlager des Hakens aufweisen, damit dieser im zugeordneten Verschlussteil verdreht werden kann.

Der Aufbau der Elemente ist nach einer bevorzugten Ausführung so gestaltet, dass die Elemente doppelwandig ausgebildet und mit Isoliermaterial ausgefüllt werden.

Dabei ist vorteilhaft vorgesehen sein, dass ein Isoliermaterial mit Schallschutz- und/oder Feuerschutz-Eigenschaften verwendet wird, das von Blechwänden umschlossen ist.

Um die Stoßstellen zwischen den Elementen feuersicher zu verschließen, sieht eine Ausgestaltung vor, daß die Stoßstellen zwischen den Elementen mittels hochtemperaturfester und bei Brand expandierender Dichtungselemente abgedichtet werden.

Die Anbringung der Türen ist einfach so zu lösen, daß das vordere und das hintere Zargenelement mittels Türelementen verschlossen werden, wobei die vertikalen Rahmenschenkel der Zargenelemente und die Türelemente an aufeinander abgestimmten Stellen mit Scharnier- und Schließelementen versehen werden.

Ein Bausatz zur Durchführung des Verfahrens besteht nach der Erfindung aus:
a) plattenförmigen Bauelementen, Seitenelementen und Kopfelementen,
b) rahmenartigen vorderen Zargenelementen und
c) rahmenartigen hinteren Zargenelementen oder plattenförmigen Rückwandelementen,
die alle in den aufeinanderstoßenden horizontalen und/oder vertikalen Stirnflächen an aufeinander ausgerichteten Verbindungsstellen mit komplementären Verbindungselementen versehen und so miteinander verbindbar sind.

Zur Verringerung der Anzahl der benötigten verschiedenartigen Element wird vorteilhafterweise so verfahren, daß Bodenelemente und Kopfelemente sowie vordere und hintere Zargenelemente jeweils identisch ausgebildet sind.

Für die Abschottung des Sicherheitsschrankes bei einfachem Aufbau ist vorgesehen, daß horizontale Rahmenschenkel zumindest teilweise mit feuersicheren und gasdichten Kabelschottelementen versehen sind.

Der Innenraum läßt sich leicht dadurch vergrößern, daß mehrere Zargenelemente bzw. Rückwandelemente unter Weglassen von Seitenelementen miteinander gedichtet verbunden sind.

Die Erfindung wird anhand eines in den Zeichnungen dargestellten Ausführungsbeispiels näher erläutert. Es zeigt:
- **Fig. 1**: in perspektivischer Explosionsdarstellung die benötigten Elemente zur Verkleidung eines betriebsbereiten, angeschlossenen Gestellaufbaues,
- **Fig. 2**: in vergrößertem Teilschnitt eine Verbindungsstelle zwischen zwei Elementen,
- **Fig. 3**: in perspektivischer Ansicht einen handelsüblichen Drehriegelverschluß und
- **Fig. 4**: einen teilweise verkleideten Gestellaufbau zur Erläuterung des Verfahrens.

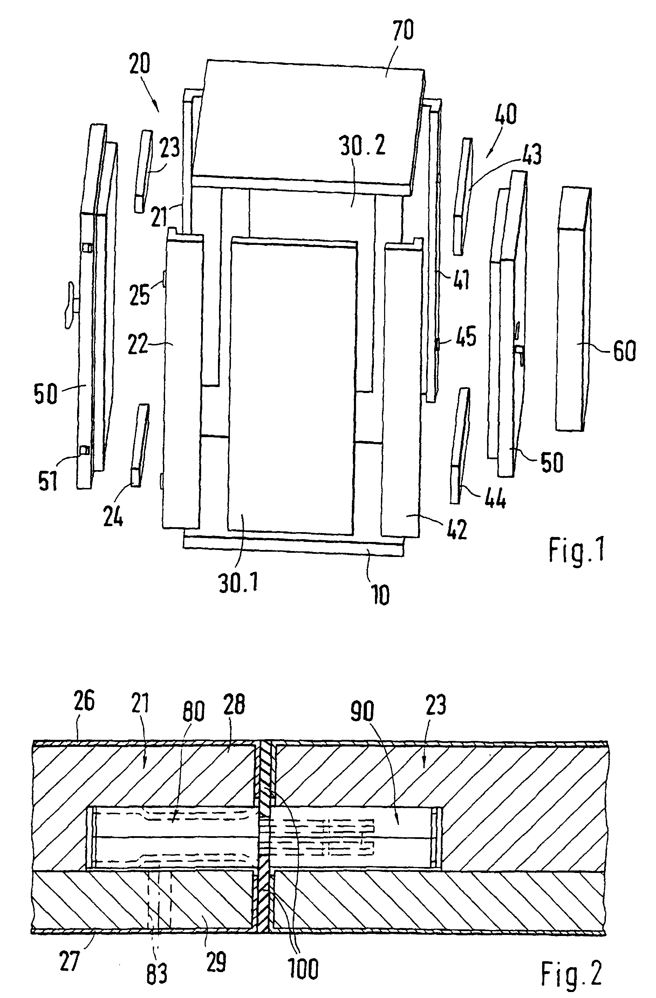

Die Fig. 1 zeigt, die Elemente für den Aufbau eines Sicherheitsschrankes und insbesondere für eine allseitig geschlossene oder verschließbare Verkleidung eines betriebsbereiten Gestellaufbaus. Der Bausatz umfaßt Bodenelemente 10 und Kopfelemente 70, die vorzugsweise plattenförmig und identisch ausgebildet sind. Die Vorderseite wird mit einem vorderen Zargenelement 20 verschlossen, das aus vertikalen Rahmenschenkeln 21 und 22 und horizontalen Rahmenschenkeln 23 und 24 zusammengesetzt wird. Die vertikalen Rahmenschenkel 21 und 22 sind im Querschnitt L-förmig, so daß beidseitig schmale Stirnflächen zur Verbindung mit anschließenden Elementen vorhanden sind. Dies hat den Vorteil, daß in diese Stirnflächen an allen Verbindungsstellen einheitliche Verschlußelemente eingebaut werden können. Auch ist eine einfache Aneinanderreihung mehrerer Sicherheitsschränke unter Weglassen von Zwischenwänden möglich.

Wird auch die Rückseite mit einem Türelement 50 verschlossen, dann wird ein hinteres Zargenelement 40 verwendet, das aus vertikalen Rahmenschenkeln 41 und 42 und horizontalen Rahmenschenkeln 43 und 44 zusammengesetzt wird und ein Türelement 50 oder ein Rückwandelement 60 aufnehmen kann, das vorteilhaft ein Klimagerät sein kann. Das Rückwandelement 60 kann auch ohne hinteres Zargenelement 40 direkt mit den Seitenelementen 30.1 und 30.2 verbunden werden. Die vertikalen Stirnflächen der vertikalen Rahmenschenkel 21 und 22 bzw. 41 und 42 von vorderem und hinterem Zargenelement 20 und 40 können wie die vertikalen Stirnflächen der Türelemente 50 mit aufeinander abgestimmten Scharnier- und Schließelementen versehen sein, wie mit den Bezugszeichen 25, 45 und 51 angedeutet ist. Da diese Elemente an sich für die Türanbringung bekannt sind, wird im Rahmen der vorliegenden Erfindung nicht näher darauf eingegangen, da dafür genügend konstruktive Ausgestaltungen zur Verfügung stehen.

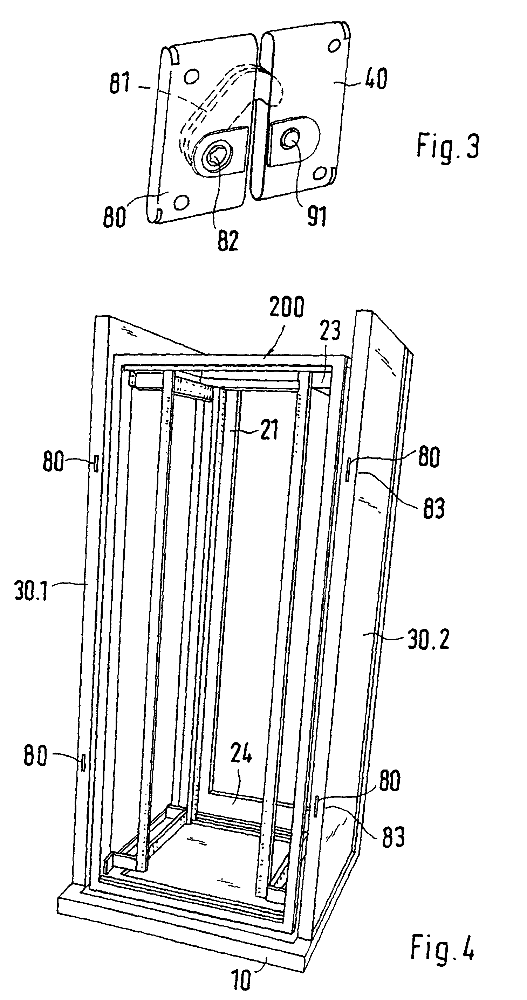

Für die Verbindung der Elemente untereinander wird vorzugsweise ein sogenannter Drehriegelverschluß verwendet, wie in Fig. 2 dargestellt ist. Der Schnitt zeigt eine Verbindungsstelle zwischen dem vertikalen Rahmenschenkel 21 und dem horizontalen Rahmenschenkel 23 des vorderen Zargenelementes 20. Dabei ist in die vertikale Stirnfläche des Rahmenschenkels 21 das Verschlußteil 80 mit dem drehbar gelagerten Haken 81 eingebaut, während in die vertikale Stirnfläche des Rahmenschenkels 23 das dazu passende Verschlußteil 90 mit dem Spannbolzen 91 eingebaut ist. Wie Fig. 3 zeigt, kann der an den Rahmenschenkel 21 abstehende Haken 81 in das hülsenartige Verschlußteil 90 eingeführt werden und durch Verdrehen mit dem Spannbolzen 91 in Eingriff gebracht werden. Wird in der Endphase der Verdrehung der Haken 81 in das Verschtußteil 80 hineingezogen, was ein Exzenter bewirken kann, dann werden die Rahmenschenkel 21 und 23 gegeneinander gezogen und verspannt.

Die Fig. 2 läßt auch den doppelwandigen Aufbau der Elemente erkennen. Die Rahmenschenkel 21 und 23 als Beispiel sind wie alle Elemente von Blechwänden 26 und 27 umschlossen und mit Isoliermaterial 28 und 29 ausgefüllt. Die Wahl des lsoliermaterials richtet sich nach dem geforderten Schallschutz, Wärmeschutz, Feuerschutz usw. Die Stoßstelle zwischen den so untereinander verbundenen Elementen wird durch ein Dichtungselement 100 abgedichtet, das im Falle des Feuerschutzes hochtemperaturfest sein muß.

Es ist klar, daß die Elemente übereinander entlang ihrer vertikalen und/oder horizontalen Stirnflächen miteinander verbunden werden können, wobei pro Element zwei oder mehr Verbindungsstellen gewählt werden. Die Verbindungsstellen sind jeweils durch die beiden Verschlußteile 80 und 90 gebildet und aufeinander ausgerichtet.

Anhand der Fig. 4 wird nun das Verfahren gemäß der Erfindung näher erläutert, wobei der Einfachheit halber von dem Gestellaufbau nur die Rahmenkonstruktion wiedergegeben ist. Die Bestückung kann mit Baugruppen beliebig vorgenommen sein, und die Anschlußkabel werden vorzugsweise über die Seitenwände des Gestellaufbaues eingeführt und angeschlossen. Hier werden geprüfte, feuersichere, wasser- und gasdichte Kabelschottsysteme eingesetzt.

Zu Beginn des Verfahrens wird der Gestellaufbau 200 mittels einer Hubvorrichtung so weit angehoben, daß ein Bodenelement 10 untergeschoben werden kann. Der Gestellaufbau 200 wird dann auf das untergeschobene Bodenelement 10 abgesetzt und dabei so positioniert, daß das Bodenelement 10 allseitig in gleichem Maße über die Außenseiten des Gestellaufbaues 200 versteht.

Danach wird das vordere, aus den Rahmenschenkeln 21,22,23 und 24 zusammengesetzte Zargenelement 20 im Bereich der Vorderseite des Gestellaufbaues 200 auf den überstehenden Teil des Bodenelementes 10 aufgesetzt und mit dem Bodenelement 10 verbunden. Dabei sind im Bereich der Außenseite des unteren, horizontalen Rahmenschenkels 24 und der zugekehrten Seite des Bodenelementes 10 vorzugsweise zwei Drehriegelverschlüsse nach Fig. 3 eingebaut, wobei im Bodenelement 10 z.B. die Verschlußteile 90 eingelassen sind und in dem Rahmenschenkel 24 Verschlußteile 80 eingebaut sind. Die Riegelachsen 82 sind vorzugsweise als Werkzeugaufnahmen ausgebildet, die über Zugangsöffnungen 83 im Rahmenschenkel 24 zugänglich sind.

Ist das vordere Zargenelement 20 mit dem Bodenelement 10 verbunden, dann werden die plattenförmigen Seitenelemente 30.1 und 30.2 auf das Bodenelement 10 aufgestellt und mit den Stirnflächen der freien Schenkel der L-förmigen vertikalen Rahmenschenkel 21 und 22 des vorderen Zargenelementes 20 und/oder mit der Bodeneinheit 10 verbunden. Dabei können jeweils zwei und mehr Drehriegelverschlüsse pro Stoßstelle verwendet werden. Die Stoßstellen werden, wie Fig. 2 gezeigt hat, mit Dichtungselementen 100 abgedichtet, die entsprechend der gewünschten Eigenschaft beschaffen sind.

Die Elemente selbst sind so ausgebildet, daß sie in Verbindung mit den Dichtungselementen 100 einen gewünschten Schutz - Wärmeschutz, Schallschutz, Feuerschutz, Spritzwasserschutz usw. - für den Gestellaufbau 200 bringen.

Die Rückseite des Gestellaufbaues 200 kann mit einem hinteren Zargenelement 40 abgedeckt werden, das aus den Rahmenschenkeln 41,42,43 und 44 zusammengesetzt ist, wobei die Verbindungen zwischen den Rahmenschenkeln ebenfalls mit Drehriegelverschlüssen vorgenommen werden können, die im Bereich der Stoßstellen eingebaut und mit einem Dichtungselement 100 abgedichtet sind.

Wie die Fig. 4 zeigt, sind die freien vertikalen Stirnflächen der Seitenelemente 30.1 und 30.2 mit Verschlußteilen 80 versehen, deren Riegel 81 in Verschlußteile 90 einführbar sind, die mit ihren Spannbolzen 91 in die vertikalen Rahmenschenkel 41 und 42 des hinteren Zargenelementes 40 eingebaut sind. Wie bereits erwähnt, kann an dem hinteren Zargenelement auch ein Türelement 50 angelenkt werden. In das hintere Zargenelement 40 kann aber auch ein Rückwandelement 60 eingesetzt und mit dem Zargenelement 40 verbunden werden. Ein Rückwandelement 60 entsprechender Größe kann auch direkt mit den Seitenelementen 30.1 und 30.2 verbunden werden. Dabei können alle horizontalen und vertikalen Stoßstellen mit zwei und mehr Drehriegelverschlüssen versehen werden.

Zum Schluß wird auf die Zargenelemente 20 und 40 und die Seitenelemente 30.1 und 30.2 ein Kopfelement 70 aufgesetzt und mit diesem im Bereich ihrer Stoßstelle durch Drehriegelverschlüsse miteinander verbunden. Dabei können die Zugangsöffnungen 83 zu den Drehachsen 82 der Riegel 81 von der Außen- oder Innenseite der hergestellten Verkleidung aus zugänglich sein.

Von Vorteil ist, wenn das Bodenelement 10 und das Kopfeiement 70 identisch ausgebildet sind. Dasselbe gilt auch für das vordere Zargenelement 20 und das hintere Zargenelement 40 und selbstverständlich sind die Seitenelemente 30.1 und 30.2 gleich ausgebildet. Auf diese Weise wird die Anzahl der für eine Verkleidung eines Gestellaufbaus 200 benötigten, verschiedenartigen Elemente reduziert. An allen Verbindungsstellen werden einheitliche Verbindungselemente, z.B. an sich bekannte Drehriegelverschlüsse, eingesetzt. Andere Verschlüsse sind ebenfalls denkbar.

Im Bereich der Rückseite des Gestellaufbaus 200 kann in dem hinteren Zargenelement 40 oder dem Rückwandelement 60 eine Ausnehmung vorgesehen sein, durch die Anschlußkabel zum Gestellaufbau 200 geführt sind. Die Anschlußkabel können in der Ausnehmung durch eine nachträglich einbringbare Kabeleinführung abgedichtet werden.

## Patentansprüche

1. Sicherheitsschrank mit einem Bodenelement (10), zwei Seitenelementen (30.1; 30.2), einem Rückwandelement (60), einem Kopfelement (70) und einem vorderen - oder einem vorderen und statt dem Rückwandelement (60) einem hinteren - Zargenelement (20) mit Anschlusselementen (51) für ein Türelement (50), die an aufeinander ausgerichteten Verbindungsstellen mit Dichtungen und mit komplementären Verbindungselementen (80, 90) zum Zusammenbau und Demontieren durch einen Anwender versehen sind,
**dadurch gekennzeichnet,**
**dass** alle Elemente (10, 30.1, 30.2, 50, 60, 70) doppelwandig ausgebildet und mit Isoliermaterial (28, 29) als Schallschutz und/oder Feuerschutz ausgefüllt sind, das von Blechwänden (26, 27) umschlossen ist, dass die Stoßstellen zwischen den Elementen (10, 30.1, 30.2, 50, 60, 70) mittels hochtemperaturfester Dichtungselemente (100) abgedichtet sind und
**dass** die vertikalen Rahmenschenkel (21, 22) des Zargenelementes (20) oder der Zargenelemente im Querschnitt L-förmig ausgebildet sind und mit einem Schenkel Verbindungsflächen für die Seitenelemente (30.1, 30.2) bilden.

2. Sicherheitsschrank nach Anspruch 1,
**dadurch gekennzeichnet,**
**dass** die Verbindungselemente (80, 90) als Drehriegelverschlüsse ausgebildet und in die aufeinander stoßenden Flächen der Seitenelemente (30.1, 30.2) des Rückwandelements (60), des Bodenelements (10) und/oder des Kopfelements (70) eingebaut sind.

3. Sicherheitsschrank nach Anspruch 1 oder 2,
**dadurch gekennzeichnet,**
**dass** das Bodenelement (10) und das Kopfelement (70) identisch ausgebildet sind.

4. Sicherheitsschrank nach einem der Ansprüche 1 bis 3
**dadurch gekennzeichnet,**
**dass** das vordere und das hintere Zargenelement (20, 40) aus vertikalen und horizontalen Rahmenschenkeln (21, 22; 41, 42 und 23, 24; 43, 44) rahmenartig zusammengesetzt und identisch ausgebildet sind.

5. Sicherheitsschrank nach Anspruch 4
**dadurch gekennzeichnet,**
**dass** das rahmenartige vordere und hintere Zargenelement (20, 40) auf dem Bodenelement (10) aufgesetzt sowie mit den Seitenelementen (30.1, 30.2) und/oder dem Bodenelement (10) verbunden sind.

6. Sicherheitsschrank nach einem der Ansprüche 1 bis 5,
**dadurch gekennzeichnet,**
**dass** die Türelemente (50) mit dem vorderen und/oder hinteren Zargenelement (20 und/oder 40) verbindbar sind, wobei die vertikalen Rahmenschenkel (21, 22; 41, 42) der Zargenelemente (20, 40) an aufeinander ausgerichteten Verbindungsstellen mit Scharnier- und Schließelementen (25, 45; 51) versehen sind.

7. Sicherheitsschrank nach einem der vorhergehenden Ansprüche,
**dadurch gekennzeichnet,**
**dass** das vordere und hintere Zargenelement (20, 40) identisch ausgebildet sind.

8. Sicherheitsschrank nach einem der vorhergehenden Ansprüche,
**dadurch gekennzeichnet,**
**dass** ein Gestellaufbau (200) als bestückte und verdrahtete Einheit in den Sicherheitsschrank eingebracht und mit diesem verbunden ist.

9. Bausatz für einen Schaltschrank bestehend aus einem oder mehreren Sicherheitsschränken nach einem der vorhergehenden Ansprüche,
**dadurch gekennzeichnet,**
**dass** feuersichere, gasdichte Kabelschottsysteme zumindest zum Teil anstelle der Rahmenschenkel (23, 24, 43, 44) eingesetzt sind.

10. Bausatz nach Anspruch 9,
**dadurch gekennzeichnet,**
**dass** mehrere Sicherheitsschränke unter Weglassen von zwischenliegenden Seitenelementen (30.1, 30.2) aneinandergereiht sind.

## Claims

1. Safe cabinet, including a base member (10), two lateral members (30.1; 30.2), a rear wall member (60), a top member (70) and a front - or a front and, instead of the rear wall member (60), a rear - edge member (20) with coupling members (51) for a door member (50), which coupling members are provided, at connection points which are aligned with one another, with seals and with complementary connecting members (80, 90) for assembly and disassembly by a user, **characterised in that** all of the members (10, 30.1, 30.2, 50, 60,70) are double-walled and are filled with insulating material (28, 29) for sound insulation and/or fire protection, which material is surrounded by sheet metal walls (26, 27), **in that** the junctions between the members (10, 30.1, 30.2, 50, 60, 70) are sealed by means of sealing members (100) which are resistant to high temperatures, and **in that** the vertical frame portions (21, 22) of the edge member (20) or of the edge members have an L-shaped cross-section and form connection surfaces for connecting the lateral members (30.1, 30.2) to one portion.

2. Safe cabinet according to claim 1, **characterised in that** the connecting members (80, 90) are in the form of hasplike closures and are incorporated in the faces, abutting against one another, of the lateral members (30.1, 30.2), of the rear wall member (60), of the base member (10) and/or of the top member (70).

3. Safe cabinet according to claim 1 or 2, **characterised in that** the base member (10) and the top member (70) are identical.

4. Safe cabinet according to one of claims 1 to 3, **characterised in that** the front and rear edge members (20, 40) comprise vertical and horizontal frame portions (21, 22; 41, 42 and 23, 24; 43, 44) in the form of a frame and are identical.

5. Safe cabinet according to claim 4, **characterised in that** the framelike front and rear edge members (20, 40) are mounted on the base member (10) and are connected to the lateral members (30.1, 30.2) and/or to the base member (10).

6. Safe cabinet according to one of claims 1 to 5, **characterised in that** the door members (50) are connectable to the front and/or rear edge members (20 and/or 40), the vertical frame portions (21, 22; 41, 42) of the edge members (20, 40) being provided with hinge members and closing members (25, 45; 51) at connection points which are aligned with one another.

7. Safe cabinet according to one or more of the preceding claims, **characterised in that** the front and rear edge members (20, 40) are identical.

8. Safe cabinet according to one or more of the preceding claims, **characterised in that** a framework structure (200) is introduced into the safe cabinet as an equipped and wired unit and is connected to said cabinet.

9. Structural assembly for a switchgear cabinet, comprising one or more safe cabinets according to one of the preceding claims, **characterised in that** fireproof, gastight cable partition systems are used, at least in part, instead of the frame portions (23, 24, 43, 44).

10. Structural assembly according to claim 9, **characterised in that** a plurality of safe cabinets are disposed in rows adjacent to one another, without lateral members (30.1, 30.2) being interposed therebetween.

## Revendications

1. Armoire de sécurité avec un élément de fond (10), deux éléments latéraux (30.1 ; 30.2), un élément de paroi arrière (60), un élément de tête (60) et un élément de châssis (20) avant -ou un élément de châssis (20) avant et un élément de châssis (20) arrière au lieu de l'élément de paroi arrière (60)- avec des éléments de raccordement (51) pour un élément de porte (50) qui sont munis, à des emplacements de liaison orientés les uns vers les autres, de joints d'étanchéité et d'éléments de liaison (80, 90) complémentaires pour l'assemblage et le démontage par un utilisateur,
**caractérisée en ce**
**que** tous les éléments (10, 30.1, 30.2, 50, 60, 70) sont réalisés à double paroi et sont remplis d'un matériau d'isolation (28, 29), en tant qu'isolation phonique et/ou protection ignifuge, qui est entouré par des parois de tôle (26, 27),
**que** les emplacements de joint entre les éléments (10, 30.1, 30.2, 50, 60, 70) sont étanchéisés au moyen d'éléments d'étanchéité (100) résistant aux températures élevées et
**que** les montants de cadre (21, 22) de l'élément de châssis (20) ou des éléments de châssis sont conformés en forme de L en section transversale et forment par un montant des surfaces de liaison pour les éléments latéraux (30.1, 30.2).

2. Armoire de sécurité selon la revendication 1,
**caractérisée en ce**
**que** les éléments de liaison (80, 90) sont conformés en tant que fermeture à espagnolette et sont logés dans les surfaces butant l'une sur l'autre des éléments latéraux (30.1, 30.2) de l'élément de paroi arrière (60), de l'élément de fond (10) et/ou de l'élément de tète (70).

3. Armoire de sécurité selon la revendication 1 ou 2,
**caractérisée en ce**
**que** l'élément de fond (10) et l'élément de tête (70) sont réalisés identiques.

4. Armoire de sécurité selon l'une des revendications 1 à 3,
**caractérisée en ce**
**que** les éléments de châssis (20, 40) avant et arrière sont composés de montants de cadre (21, 22 ; 41, 42 et 23, 24 ; 43, 44) verticaux et horizontaux en forme de cadre et sont réalisés identiques.

5. Armoire de sécurité selon la revendication 4,
**caractérisée en ce**
**que** les éléments de châssis (20, 40) avant et arrière en forme de cadre sont posés sur l'élément de fond (10) et sont également reliés aux éléments latéraux (30.1, 30.2) et/ou à l'élément de fond (10).

6. Armoire de sécurité selon l'une des revendications 1 à 5,
**caractérisée en ce**
**que** les éléments de porte (50) peuvent être reliés aux éléments de châssis (20 et/ou 40) avant et/ou arrière, les montants de cadre (21, 22 ; 41, 42) verticaux des éléments de châssis (20, 40) étant munis d'éléments de charnière et de fermeture (25, 45; 51).

7. Armoire de sécurité selon l'une des revendications précédentes,
**caractérisée en ce**
**que** les éléments de châssis (20, 40) avant et arrière sont réalisés identiques.

8. Armoire de sécurité selon l'une des revendications précédentes,
**caractérisée en ce**
**qu'**une construction en baies (200) est montée dans l'armoire de sécurité sous forme d'unité équipée et câblée et est reliée à celle-ci.

9. Kit pour une armoire électrique consistant en une ou plusieurs armoires de sécurité selon l'une revendications précédentes,
**caractérisé en ce**
**que** des systèmes de cloisons étanches de câbles étanches aux gaz sont montés au moins en partie à la place des montants de cadre (23, 24, 43, 44).

10. Kit selon la revendication 9,
**caractérisé en ce**
**que** plusieurs armoires de sécurité sont montées alignées les unes à côté des autres en omettant des éléments latéraux (30.1, 30.2) disposés entre elles.
